# EUROPEAN PATENT SPECIFICATION

(11) **EP 3 604 057 B1**
(45) Date of publication and mention of the grant of the patent: **26.08.2020**
(21) Application number: 19189587.9
(22) Date of filing: 01.08.2019
(51) Int. Cl.: B60T 8/26, B62L 3/08

(54) **VEHICLE BRAKE SYSTEM AND VEHICLE INCLUDING SAME BRAKE SYSTEM**
FAHRZEUGBREMSANLAGE UND FAHRZEUG MIT SOLCH EINEM BREMSSYSTEM
SYSTÈME DE FREINAGE DE VÉHICULE ET VÉHICULE COMPRENANT CE SYSTÈME DE FREINAGE

(30) Priority: 02.08.2018 JP 2018146025
(43) Date of publication of application: 05.02.2020
(73) Proprietor: YAMAHA HATSUDOKI KABUSHIKI KAISHA, Iwata-shi, Shizuoka 438-8501 (JP)
(72) Inventor: KIKUCHI, Yuta, Iwata-shi, Shizuoka 438-8501 (JP); SAGANE, Kazunari, Iwata-shi, Shizuoka 438-8501 (JP); TOZUKA, Kenya, Iwata-shi, Shizuoka 438-8501 (JP)
(74) Representative: Grünecker Patent- und Rechtsanwälte PartG mbB

(56) References cited:
- EP-A2- 2 682 334
- EP-A2- 2 684 788
- TW-A- 200 914 323

## Description

The present invention relates to a vehicle brake system and a vehicle including this vehicle brake system.

A vehicle brake system for a straddle-type vehicle is known in JP 2008-290699 A or the like. This vehicle brake system includes a front wheel brake lever provided at one of a right portion and a left portion of a handlebar and an interlocking brake lever provided at the other of the right portion and the left portion of the handlebar. A front wheel brake is activated by operating the front wheel brake lever. The front wheel brake and a rear wheel brake are activated by operating the interlocking brake lever.

A vehicle brake system with the features of the preamble of claim 1 is known from TW 2009-14323 A.

Incidentally, the vehicle brake system described in JP 2008-290699 A is considered to be mounted on a scooter. On the other hand, a four-wheeled vehicle is equipped with a brake lever that a driver operate with his or her foot. Thus, in the case where a person who is accustomed to operating a brake system on a four-wheeled vehicle tries to ride a straddle-type vehicle, it is considered to be preferable that a foot-operating brake operator is mounted on the straddle-type vehicle.

It is an object of the invention is to provide a vehicle brake system that is easy to be operated by both a person who is accustomed to operating a brake system on a scooter and a person who is accustomed to operating a brake system on a four-wheeled vehicle and a vehicle equipped with this vehicle brake system. According to the present invention said object is solved by a vehicle brake system having the features of independent claim 1. Preferred embodiments are laid down in the dependent claims.

According to an aspect of the invention, there is provided a vehicle brake system including:
a first master cylinder configured to activate a first brake device for applying a braking force to at least one of a front wheel or a rear wheel of a vehicle;
a first operator configured to be operated by a hand of a user;
a second operator configured to be operated by a hand or a foot of the user; and
a third operator configured to be operated by a foot of the user,
wherein the first master cylinder is configured to be operated according to a resultant force of forces applied to the first operator, the second operator, and the third operator.

In the vehicle brake system described above, the vehicle brake system may include a second master cylinder configured to activate a second brake device for applying a braking force to the other of the front wheel or the rear wheel of the vehicle, and the second master cylinder may be configured to be operated according to a resultant force of forces applied to the second operator and the third operator.

In the vehicle brake system described above, at least one of the front wheel or the rear wheel may include a right wheel and a left wheel, and the first brake device may apply a braking force to the right wheel and the left wheel.

In the vehicle brake system described above, the front wheel may include a right front wheel and a left front wheel, and the first brake device may apply a braking force to the right front wheel and the left front wheel.

In the vehicle brake system described above, the vehicle brake system may include a first mechanical element configured to be moved by at least a force applied to the first operator to operate the first master cylinder, and a second mechanical element configured to be moved by a resultant force of forces applied to the second operator and the third operator to move the first mechanical element.

In the vehicle brake system described above, the second mechanical element may include:
a first element configured to move according to a force applied to the second operator independently of a force by the third operator;
a second element configured to move according to a force applied to the third operator independently of a force by the second operator;
a third element configured to be moved by the first element or the second element; and
a fourth element configured to be moved by the third operator to operate the first master cylinder.

In the vehicle brake system described above, the vehicle brake system may include:
a second master cylinder configured to activate a second brake device for applying a braking force to the other of the front wheel or the rear wheel; and
a fifth element configured to be moved by the fourth element to operate the second master cylinder.

In the vehicle brake system described above, the fourth element may be connected to the first mechanical element with a wire.

In the vehicle brake system described above, the second element may be connected to the third operator with a wire.

In the vehicle brake system described above, a first elongated hole may be provided in one of the first mechanical element and the second mechanical element, a first connector may be provided in the other of the first mechanical element and the second mechanical element, the first connector being configured to move within the first elongated hole, and when the first mechanical element is displaced by an operating force of the first operator, the first mechanical element may be prevented from transmitting the operating force of the first operator to the second mechanical element by the first connector moving within the first elongated hole.

In the vehicle brake system described above, a second elongated hole may be provided in one of the second element and the third operator, a second connector may be provided in the other of the second element and the third operator, the second connector being configured to move within the second elongated hole, and when the second element is displaced by an operating force of the second operator, the second element may be prevented from transmitting the operating force of the second operator to the third operator by the second connector moving within the second elongated hole.

According to another aspect of the invention, there is provided a vehicle including:
a front wheel;
a rear wheel; and
a vehicle brake system including a second master cylinder configured to activate a first brake device for applying a braking force to one the front wheel or the rear wheel.

According to the invention, the vehicle brake system that is easy to be operated by both a person who is accustomed to operating a brake system on a scooter and a person who is accustomed to operating a brake system on a four-wheeled vehicle and the vehicle equipped with this vehicle brake system are provided.

### BRIEF DESCRIPTION OF THE DRAWINGS

Fig. 1 is a left side view showing a vehicle on which a vehicle brake system according to an embodiment of the invention is mounted.
Fig. 2 is a front view of the vehicle shown in Fig. 1.
Fig. 3 is a schematic drawing showing the whole of the vehicle brake system when the vehicle brake system is not in operation.
Fig. 4 is a schematic drawing showing the whole of the vehicle brake system when a left lever is activated to operate.
Fig. 5 is a drawing showing part of a left pushing mechanism when the left lever is operated.
Fig. 6 is a schematic drawing showing the whole of the vehicle brake system when a foot lever is in operation.
Fig. 7 is a drawing showing part of the left pushing mechanism when the foot lever is operated.
Fig. 8 is a schematic drawing showing the whole of the vehicle brake system when a right lever is in operation.
Fig. 9 is a schematic drawing showing the whole of the vehicle brake system when the right lever, the left lever, and the foot lever are all in operation.
Fig. 10 is a schematic drawing showing the whole of a vehicle brake system according to a first modified example of the invention.
Fig. 11 is a schematic drawing showing the whole of a vehicle brake system according to a second modified example of the invention.

### EMBODIMENTS OF THE INVENTION

Hereinafter, referring to drawings, an embodiment of the invention will be described. Dimensions of constituent elements shown in the individual drawings do not represent truly actual dimensions of the constituent elements and dimensional ratios of the constituent elements.

In the following description, front, rear, left and right mean front, rear, left and right as viewed from a rider who is seated on a seat of a vehicle 1 while gripping on a handlebar 4. In the drawings, an arrow F denotes a forward direction of the vehicle 1, an arrow B denotes a backward direction, an arrow R denotes a rightward direction, an arrow L denotes a leftward direction, an arrow U denotes an upward direction, and an arrow D denotes a downward direction.

### <Overall Configuration of Motorcycle>

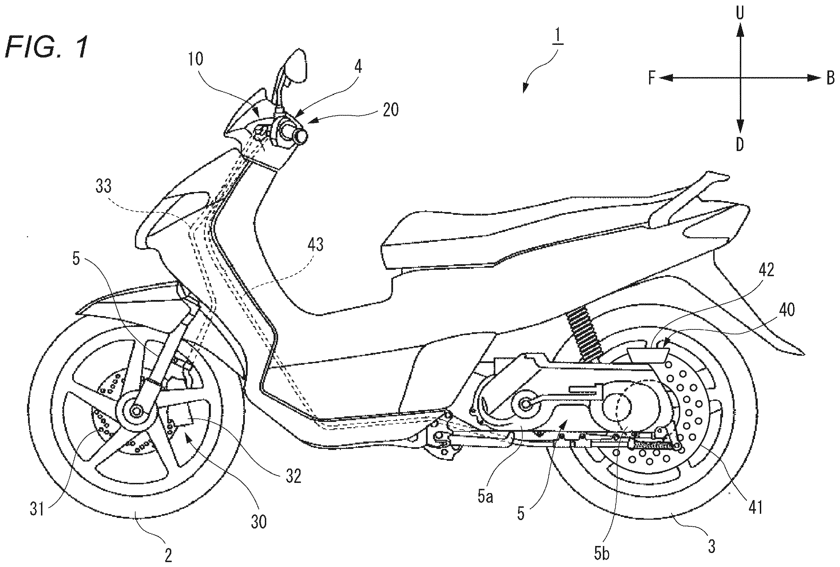

Fig. 1 is a left side view showing a vehicle 1 on which a vehicle brake system 10 according to an embodiment of the invention is mounted. This vehicle 1 includes a front wheel 2 and a rear wheel 3 disposed behind the front wheel 2.

The vehicle 1 includes a handlebar 4, a power unit 5, and the vehicle brake system 10. The vehicle 1 includes a head pipe and a vehicle body frame including a main frame connected to the head pipe and the like. The head pipe is disposed at a front portion of the vehicle 1. At least part of the vehicle body frame is covered by a vehicle body cover of a resin.

As shown in Fig.1, the power unit 5 is provided between the vehicle body frame and the rear wheel 3. The power unit 5 includes an engine 5a, a driving force transmission device 5b, and the like.

The engine 5a is a unit swing-type engine and is disposed on the vehicle body frame in such a manner as to swing together with the rear wheel 3 in an up-and-down direction. The driving force transmission device 5b is disposed behind the engine 5a in a front-and-rear direction of the vehicle 1, and this driving force transmission device 5b transmits a driving force outputted from the engine 5a to the rear wheel 3. The engine 5a is disposed forwards of the driving force transmission device 5b in the front-and-rear direction of the vehicle 1, in other words, the driving force transmission device 5b is disposed rearwards of the engine 5a in the front-and-rear direction of the vehicle 1. In this embodiment, the driving force transmission device 5b includes a continuously variable transmission requiring no clutch operation.

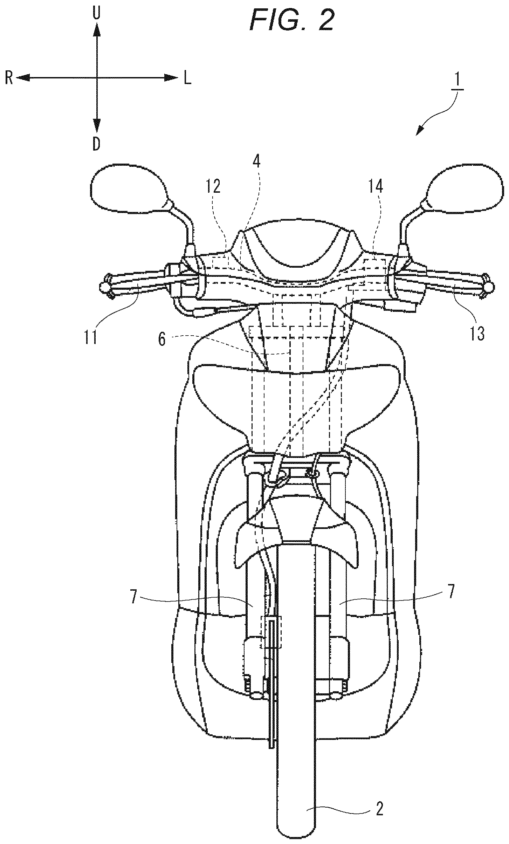

Fig. 2 is a front view of the vehicle 1. A steering shaft 6 is disposed in the head pipe in such a manner as to turn around an axis extending in the up-and-down direction. A pair of front suspensions 7, which are disposed parallel to each other, is connected to the steering shaft 6. The front wheel 2 is attached rotatably to lower ends of the pair of front suspensions 7. The front wheel 2 is turned via the pair of front suspensions 7 by turning the steering shaft 6 around the axis.

The handlebar 4, which extends in a left-and-right direction, is connected to an upper portion of the steering shaft 6 in such a manner as to be turned relative to the head pipe. A right lever 11 and a front master cylinder 12, both of which will be described later, are attached to a right portion of the handlebar 4. A left lever 13 and a rear master cylinder 14, both of which will be described later, are attached to a left portion of the handlebar 4.

### <Vehicle Brake System 10>

Next, the vehicle brake system 10 provided on the vehicle 1 will be described in detail. As shown in Fig. 1, the vehicle brake system 10 includes a brake operation mechanism 20, a front brake device 30, and a rear brake device 40. The front brake device 30 is a device for applying a braking force to the front wheel 2. The rear brake device 40 is a device for applying a braking force to the rear wheel 3. The brake operation mechanism 20 is a mechanism for receiving an operation by a rider using his or her hand or foot.

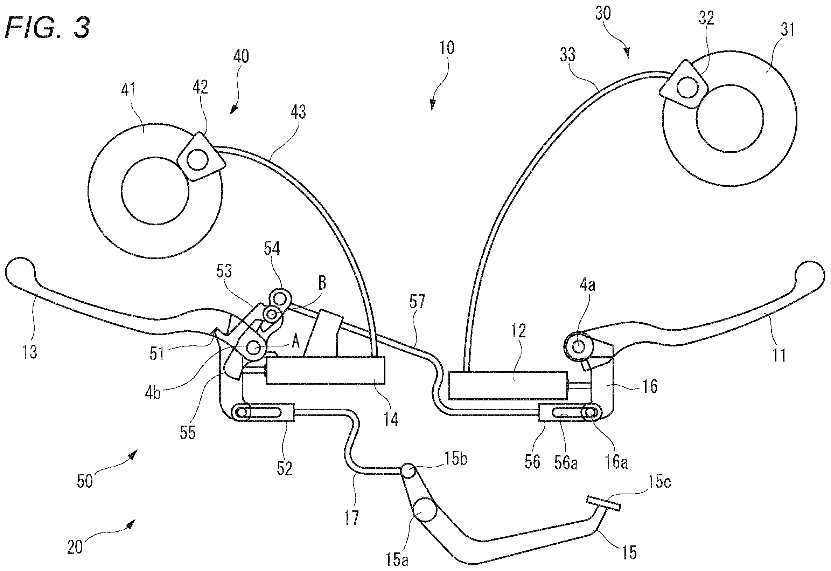

Fig. 3 is a schematic drawing showing the whole of the vehicle brake system 10 when it is not in operation. As shown in Fig. 3, the front brake device 30 of this embodiment is a so-called hydraulic disc brake. The front brake device 30 has a front brake disc 31, a front brake caliper 32, and a front brake hose 33.

As shown in Fig. 1, the front brake disc 31 is supported by a lower end portion of the front suspension 7 in such a manner as to rotate together with the front wheel 2. The front brake caliper 32 is attached to the front suspension 7. The front brake caliper 32 includes brake pads configured to hold therebetween the front brake disc 31 in a thickness direction of the front brake disc 31. The brake pads are pressed against the front brake disc 31 by means of a hydraulic pressure transmitted by way of the front brake hose 33. As a result, a braking force is applied to the front wheel 2.

In this embodiment, the front brake device 30 includes the one brake disc and the one brake caliper. However, the front brake device 30 may include two or more brake discs and two or more brake calipers that are disposed individually for the corresponding brake discs.

As shown in Fig. 3, in this embodiment, similar to the front brake device 30 described above, the rear brake device 40 is also a hydraulic disc brake. That is, the rear brake device 40 also includes a rear brake disc 41, a rear brake caliper 42, and a rear brake hose 43. The rear brake device 40 is provided transversely inwards of the driving force transmission device 5b, that is, transversely inwards of a rear portion of the power unit 5.

The rear brake disc 41 is supported by a swing arm, not shown, in such a manner as to rotate together with the rear wheel 3. Similar to the brake pads of the front brake caliper 32, brake pads of the rear brake caliper 42 are pressed against the rear brake disc 41 by means of a hydraulic pressure transmitted by way of the rear brake hose 43. As a result, a braking force is applied to the rear wheel 3. The rear brake device 40 may be configured as a so-called drum brake.

As shown in Fig. 3, the brake operation mechanism 20 includes a right lever 11 (a first operator), a left lever 13 (a second operator), and a foot lever 15 (a third operator). In this embodiment, when the rider operates only the right lever 11, the front brake device 30 is activated to operate. When the rider operates only the left lever 13, the front brake device 30 and the rear brake device 40 are activated to operate. When the rider operates only the foot lever 15, the front brake device 30 and the rear brake device 40 are activated to operate.

The right lever 11 is an operator that can be operated by a right hand of the rider. A left portion of the right lever 11 is attached in such a manner as to turn around a right turning shaft portion 4a provided at a right portion of the handlebar 4. Aright pushing portion 16 is provided at this right turning shaft portion 4a in such a manner as to turn therearound. When the rider pulls the right lever 11 with his or her right hand, the front master cylinder 12 is pushed. As a result, a hydraulic pressure generated by the front master cylinder 12 is transmitted to the front brake caliper 32, whereby a braking force is applied to the front wheel 2.

The left lever 13 is an operator that can be operated by a left hand of the rider. Aright portion of the left lever 13 is attached in such a manner as to turn around a fixed shaft portion 4b provided at a left portion of the handlebar 4. When the rider pulls the left lever 13 with his or her left hand, the rear master cylinder 14 is pushed. As a result, a hydraulic pressure generated by the rear master cylinder 14 is transmitted to the rear brake caliper 42, whereby a braking force is applied to the rear wheel 3. Additionally, the front master cylinder 12 is pushed in association with the operation of the left lever 13. As a result, a hydraulic pressure generated by the front master cylinder 12 is transmitted to the front brake caliper 32, whereby a braking force is applied to the front wheel 2.

The foot lever 15 is an operator that can be operated by a right foot or a left foot of the rider. The foot lever 15 is attached in such a manner as to turn around a turning shaft portion 15a provided on the vehicle body frame. One end portion of the foot lever 15 is connected to a foot wire 17. The turning shaft portion 15a is provided between a connecting portion 15b with the foot wire 17 and a portion 15c where an operation force is inputted from the foot of the rider.

When the rider depresses the foot lever 15 with his or her foot, the foot wire 17 is pulled, and the rear master cylinder 14 is pushed. As a result, a hydraulic pressure generated by the rear master cylinder 14 is transmitted to the rear brake caliper 42, whereby a braking force is applied to the rear wheel 3. In addition, the front master cylinder 12 is pushed in association with the operation of the foot lever 15. As a result, a hydraulic pressure generated by the front master cylinder 12 is transmitted to the front brake caliper 32, whereby a braking force is applied to the front wheel 2.

Next, the brake operation mechanism 20 will be described in detail. As shown in Fig. 3, the brake operation mechanism 20 includes the right pushing portion 16 (a first mechanical element) and a left pushing mechanism 50 (a second mechanical element). The right pushing portion 16 is supported at the right turning shaft portion 4a of the right lever 11 and turns in a clockwise direction in Fig. 3 as the right lever 11 is operated. When the right pushing portion 16 turns in the clockwise direction, the right pushing portion 16 pushes the front master cylinder 12.

In the following description, the clockwise direction and a counterclockwise direction denote turning directions in a state shown in Fig. 3. The state shown in Fig. 3 is a state where the rider mounting on the vehicle 1 views the brake operation mechanism 20.

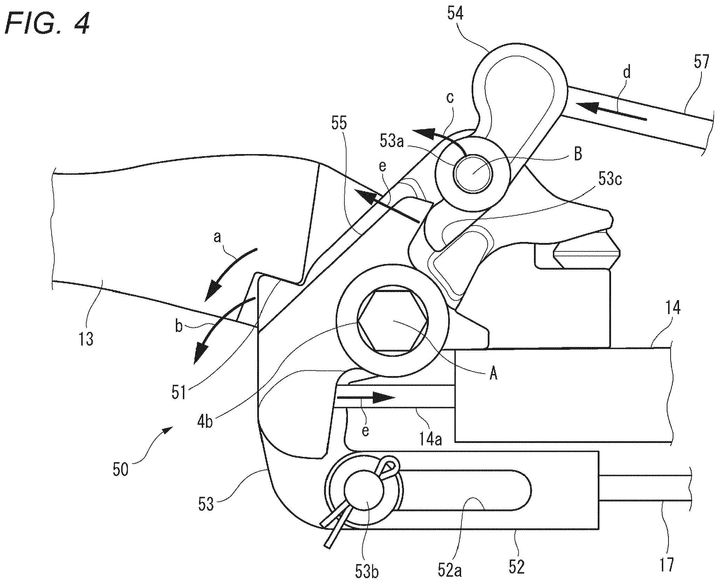

Fig. 4 is a drawing showing part of the left pushing mechanism 50 in an enlarged fashion. As shown in Fig. 4, the left pushing mechanism 50 includes a first component 51 (a first element), a second component 52 (a second element), a third component 53 (a third element), a fourth component 54 (a fourth element), a fifth component 55 (a fifth element), a sixth component 56, and an interlocking wire 57. These first component 51 to sixth component 56 are component independent on one another.

The first component 51 is provided integrally with a right end portion of the left lever 13. The first component 51 is displaced by means of an operation force applied to the left lever 13, independently of an operation force applied to the foot lever 15. The first component 51 is supported at a fixed shaft portion 4b provided at a left portion of the handlebar 4 in such a manner as to turn. In the following description, a center axis of the fixed shaft portion 4b will be referred to as a fixed axis A.

The third component 53 is supported at the fixed shaft portion 4b in such a manner as to turn. The third component 53 can be brought into abutment with the first component. The third component 53 is biased in the clockwise direction at all times by a biasing means, not shown. The third component 53 includes a movable shaft portion 53a and a coupling shaft portion 53b. The fixed shaft portion 4b penetrates between the movable shaft portion 53a and the coupling shaft portion 53b. The movable shaft portion 53a is a shaft portion that is fixed to the third component 53. Since this shaft portion moves as the third component 53 turns, the shaft portion is called the movable shaft portion 53a.

The fourth component 54 is supported at the movable shaft portion 53a provided on the third component 53 in such a manner as to turn. The fourth component 54 is connected to one end of the interlocking wire 57. In the following description, a center axis of the movable shaft portion 53a will be referred to as a moving axis B.

The fifth component 55 is supported at the fixed shaft portion 4b in such a manner as to turn. The fifth component 55 can be brought into abutment with the fourth component 54. The fifth component 55 can push the rear master cylinder 14.

The first component 51 and the third component 53 are provided in the same position in the direction of the fixed axis A (a vertical direction to a surface of a sheet of paper on which Fig. 4 is drawn). Consequently, when the first component 51 turns around the fixed axis A in the counterclockwise direction, the first component 51 pushes the third component 53, whereby the third component 53 turns around the fixed axis A in the counterclockwise direction.

The fourth component 54 and the fifth component 55 are provided in the same position in the direction of the fixed axis A. The fourth component 54 and the fifth component 55 are provided in a different position from the position where the first component 51 and the third component 53 are provided in the direction of the fixed axis A. In the example shown in the figure, the fourth component 54 and the fifth component 55 are provided further upwards than the third component 53 above the surface of the sheet of paper in the direction of the fixed axis A. When the fourth component 54 turns around the moving axis B in the clockwise direction, the fourth component 54 pushes the fifth component 55, whereby the fifth component 55 turns around the fixed axis A in the counterclockwise direction. Consequently, in the case where there exists no fourth component 54, even though the first component 51 turns, the fifth component 55 does not turn. To describe this in a reverse way, a rotation of the first component 51 is transmitted to the fifth component 55 by way of the fourth component 54.

The fifth component 55 and an input portion 14a of the rear master cylinder 14 are provided in the same position in the direction of the fixed axis A. Consequently, when the fifth component 55 turns around the fixed axis A in the clockwise direction, the fifth component 55 pushes the rear master cylinder 14.

The second component 52 is a component having an elongated hole 52a that extends in the left-and-right direction. The second component 52 is coupled to the third component 53 in such a manner as to be displaced relatively. The coupling shaft portion 53b is inserted through the elongated hole 52a of the second component 52. The third component 53 can be displaced relative to the second component 52 by the coupling shaft portion 53b moving inside the elongated hole 52a.

One end of the second component 52 is connected to the foot wire 17. The second component 52 transmits a force from the foot wire 17 to the third component 53 but does not transmit a force from the third component 53 to the foot wire 17.

Specifically, when the foot wire 17 applies to the second component 52 a force that pulls the second component 52 to the right in Fig. 4, the second component 52 pulls the coupling shaft portion 53b to the right. That is, the second component 52 transmits the force from the foot wire 17 to the third component 53. On the other hand, even though the third component 53 moves the coupling shaft portion 53b thereof to the right, the coupling shaft portion 53b is displaced within the elongated hole 52a in the second component 52, and hence, no force is transmitted from the third component 53 to the second component 52.

Returning to Fig. 3, the sixth component 56 is a component having an elongated hole 56a. The sixth component 56 is coupled to the right pushing portion 16 in such a manner as to be displaced relatively. A coupling shaft portion 16a is inserted through the elongated hole 56a in the sixth component 56. The right pushing portion 16 can be displaced relative to the sixth component 56 by the coupling shaft portion 16a moving inside the elongated hole 56a.

One end of the sixth component 56 is connected to the coupling wire 57. The sixth component 56 transmits a force from the coupling wire 57 to the right pushing portion 16 but does not transmit a force from the right pushing portion 16 to the coupling wire 57.

Specifically, when the coupling wire 57 applies to the sixth component 56 a force that pulls the sixth component 56 to the left in Fig. 3, the sixth component 56 pulls the coupling shaft portion 16a to the left. That is, the sixth component 56 transmits the force from the interlocking wire 57 to the coupling shaft portion 16a. On the other hand, even though the right pushing portion 16 turns in the clockwise direction to move the coupling shaft portion 16a to the left, the coupling shaft portion 16a is displaced within the elongated hole 56a in the sixth component 56, and hence, no force is transmitted from the right pushing portion 16 to the sixth component 56.

### <At the Time of Operating Left Lever 13>

Next, an operation of the brake operation mechanism 20 will be described.

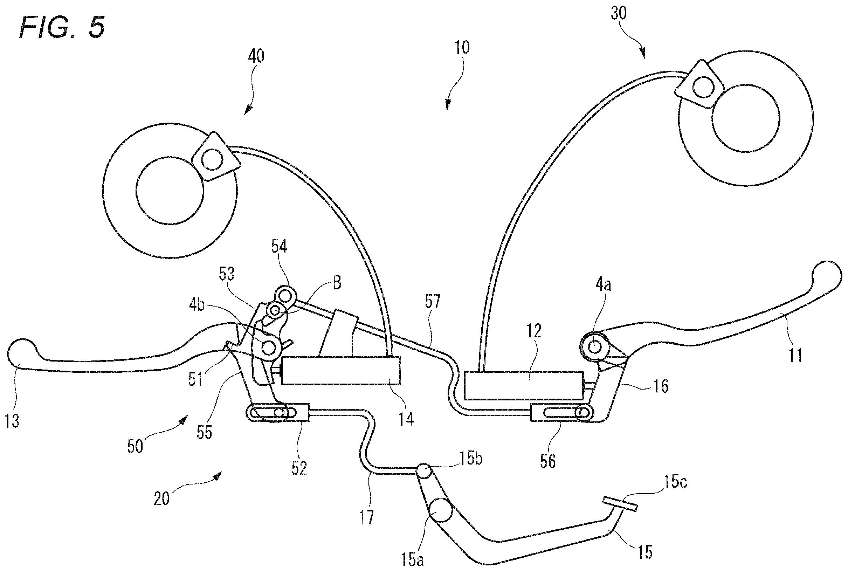

Firstly, a case will be described in which the rider operates only the left lever 13 from the state shown in Fig. 3. Fig. 5 is a schematic drawing showing the whole of the vehicle brake system 10 when the rider activates the left lever 13. As shown in Fig. 5, when the rider operates only the left lever 13, the right lever 11 does not operate, and the foot lever 15 does not operate, either. In this state, the front brake device 30 and the rear brake device 40 operate.

How the left pushing mechanism 50 operates when the rider operates the left lever 13 will be described using Fig. 4. Fig. 4 shows a state of the left lever 13 resulting immediately before the left lever 13 is operated. Movement acting to the relevant components are indicated by arrows a to e in Fig. 4.

As shown in Fig. 4, firstly, when the rider grips on the left lever 13, the first component 51 turns around the fixed axis A relative to the handlebar 4 in the counterclockwise direction (arrow a). Then, the first component 51 is brought into abutment with the third component 53, whereby the first component 51 turns the third component 53 around the fixed axis A in the counterclockwise direction (arrow b).

When the third component 53 turns around the fixed axis A in the counterclockwise direction, the movable shaft portion 53a provided on the third component 53 moves in the counterclockwise direction (arrow c). The fourth component 54 supported by the movable shaft portion 53a moves in the counterclockwise direction in association with the movable shaft portion 53a moving in the counterclockwise direction. The fourth component 54 turns the fifth component 55 around the fixed axis A in the counterclockwise direction (arrow e) while pulling the interlocking wire 57 to the left (arrow d).

How the fourth component 54 pulls the interlocking wire 57 and turns the fifth component 55 will be described in detail. When the fourth component 54 pulls the interlocking wire 57 to the left, the fourth component 54 receives a reaction force from the interlocking wire 57 and attempts to turn around the moving axis B in the clockwise direction. On the other hand, the fifth component 55 receives a reaction force from the rear master cylinder 14 when it pushes the rear master cylinder 14. This reaction force attempts to turn the fifth component 55 around the fixed axis A in the clockwise direction. This reaction force makes the fifth component 55 attempt to turn the fourth component 54 around the moving axis B in the counterclockwise direction.

That is, when the fourth component 54 pulls the interlocking wire 57 to the left, the fourth component 54 receives the two types of reaction forces that act in directions in which the two forces offset each other from the interlocking wire 57 and the fifth component 55. In association with the fourth component 54 turning around the fixed axis A in the counterclockwise direction, the fourth component 54 turns around the moving axis B to a position where those reaction forces are in balance. That is, the fourth component 54 moves in such a manner as to revolve around the fixed axis A while turning on its own axis around the moving axis B. As the left lever 13 is pulled, the fourth component 54 displaces the interlocking wire 57 to the left and turns the fifth component 55 around the fixed axis A in the counterclockwise direction.

When the fourth component 54 turns the fifth component 55 around the fixed axis A in the counterclockwise direction, the fifth component 55 pushes the rear master cylinder 14. As a result, a hydraulic pressure generated by the rear master cylinder 14 is transmitted to the rear brake caliper 42, whereby a braking force is applied to the rear wheel 3.

At this time, the first component 51 transmits no force to the second component 52. The third component 53 that is moved by the first component 51 includes the coupling shaft portion 53b. This coupling shaft portion 53b is inserted through the elongated hole 52a provided in the second component 52 in such a manner as to move therein freely. When the third component 53 turns around the fixed axis A in the counterclockwise direction, the coupling shaft portion 53b moves to the right. At this time, the coupling shaft portion 53b moves within the elongated hole 52a in the second component 52 and does not displace the second component 52. Consequently, even when the first component 51 turns, no force is transmitted to the foot lever 15 by way of the second component 52 and the foot wire 17, whereby the foot lever 15 is not activated to operate.

Returning to Fig. 5, when the fourth component 54 pulls the interlocking wire 57 to the left, the interlocking wire 57 displaces the sixth component 56 to the left. The elongated hole 56a extending in the left-and-right direction is provided in the sixth component 56. When the sixth component 56 is displaced to the left, the sixth component 56 displaces the coupling shaft portion 16a, which is inserted through the elongated hole 56a, to the left. As a result, the right pushing portion 16 turns around the right turning shaft portion 4a in the clockwise direction, activating the front master cylinder 12. As a result, a hydraulic pressure generated by the front master cylinder 12 is transmitted to the front brake caliper 32, whereby a braking force is applied to the front wheel 2.

At this time, the right pushing portion 16 transmits no force to the right lever 11. The right pushing portion 16 is a component independent of the right lever 11. As a result, even though the right pushing portion 16 turns in the clockwise direction with no force inputted into the right lever 11, the right pushing portion 16 is spaced away from the right lever 11, and no force is transmitted to the right lever 11. In other words, even when the left lever 13 is operated, the right lever 11 is not operated.

In this way, when the rider operates the left lever 13, the rear master cylinder 14 and the front master cylinder 12 are activated to operate with the right lever 11 and the foot lever 15 kept inoperative, whereby a braking force is applied to the rear wheel 3 and the front wheel 2, respectively.

### <At the Time of Operating Foot Lever 15>

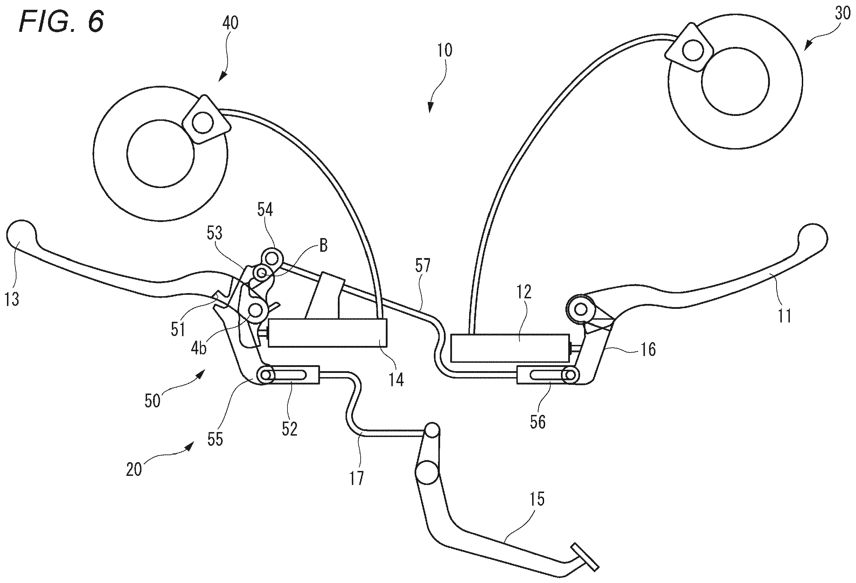

Next, a case will be described in which the rider operates only the foot lever 15 from the state shown in Fig. 3. Fig. 6 is a schematic drawing showing the whole of the vehicle brake system 10 when the rider activates the foot lever 15. As shown in Fig. 6, when the rider operates only the foot lever 15, the left lever 13 does not operate, and the right lever 11 does not operate, either. In this state, the front brake device 30 and the rear brake device 40 operate.

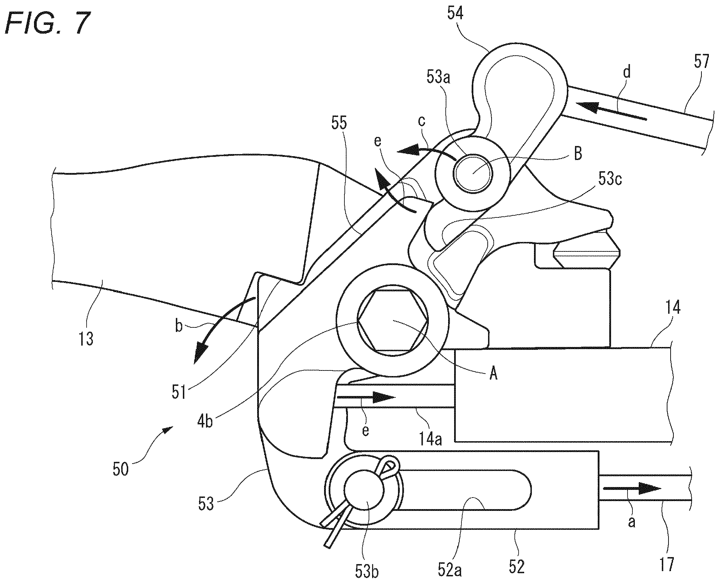

Fig. 7 is a drawing showing part of the left pushing mechanism 50 when the rider operates the foot lever 15. Fig. 7 illustrates a state of the foot lever 15 resulting immediately before the foot lever 15 is operated. Movement acting to the relevant components are indicated by arrows a to e in Fig. 7.

As shown in Fig. 6, firstly, when the rider depresses the foot lever 15, the foot lever 15 pulls the foot wire 17 to the right. Then, as shown in Fig. 7, the foot wire 17 pulls the second component 52 to the right (arrow a). The second component 52 turns the third component 53 around the fixed axis A in the counterclockwise direction via the coupling shaft portion 53b.

When the third component 53 turns around the fixed axis A in the counterclockwise direction, the movable shaft portion 53a provided on the third component 53 moves in the counterclockwise direction in Fig. 7 (arrow c). The fourth component 54 supported by the movable shaft portion 53a moves around the fixed axis A in the counterclockwise direction in association with the movable shaft portion 53a moving in the counterclockwise direction. Similarly, as described above, the fourth component 54 turns the fifth component 55 around the fixed axis A in the counterclockwise direction (arrow e) while pulling the interlocking wire 57 to the left (arrow d).

When the fourth component 54 turns the fifth component 55 around the fixed axis A in the counterclockwise direction, the fifth component 55 pushes the rear master cylinder 14. As a result, a hydraulic pressure generated by the rear master cylinder 14 is transmitted to the rear brake caliper 42, whereby a braking force is applied to the rear wheel 3.

At this time, the third component 53 transmits no force to the first component 51. The third component 53 is a component independent of the first component 51. As a result, even though the third component 53 turns around the fixed axis A in the counterclockwise direction with no force inputted into the left lever 13, the third component 53 is spaced away from the first component 51, whereby the third component 53 transmits no force to the left lever 13 that is integrated with the first component 51. In other words, even though the foot lever 15 is operated, the left lever 13 is not operated.

Returning to Fig. 6, when the fourth component 54 pulls the interlocking wire 57 to the left, the interlocking wire 57 displaces the sixth component 56 to the left. When the sixth component 56 is displaced to the left, the sixth component 56 displaces the coupling shaft portion 16a to the left. As a result, the right pushing portion 16 turns around the right turning shaft portion 4a in the clockwise direction, activating the front master cylinder 12. As a result, a hydraulic pressure generated by the front master cylinder 12 is transmitted to the front brake caliper 32, whereby a braking force is applied to the front wheel 2.

At this time, the right pushing portion 16 transmits no force to the right lever 11. The right pushing portion 16 is a component independent of the right lever 11. As a result, even though the right pushing portion 16 turns in the clockwise direction with no force inputted into the right lever 11, the right pushing portion 16 is spaced away from the right lever 11, and no force is transmitted to the right lever 11. In other words, even though the foot lever 15 operates, the right lever 11 does not operate.

In this way, when the rider operates the foot lever 15, the rear master cylinder 14 and the front master cylinder 12 are activated to operate with the right lever 11 and the left lever 13 kept inoperative, whereby a braking force is applied to the rear wheel 3 and the front wheel 2, respectively.

### <At the Time of Operating Right Lever 11>

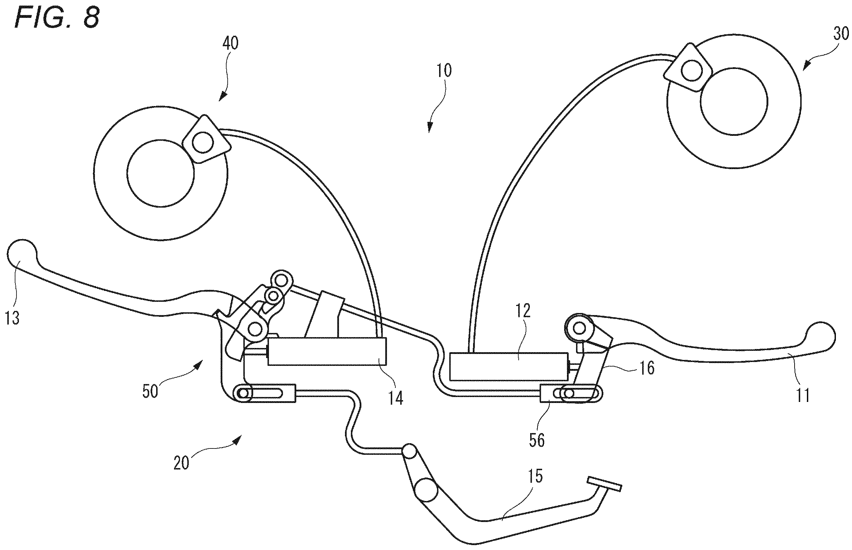

Next, a case will be described in which the rider operates only the right lever 11 from the state shown in Fig. 3. Fig. 8 is a schematic drawing showing the whole of the vehicle brake system 10 when the rider activates the right lever 11. As shown in Fig. 8, when the rider operates only the right lever 11, the left lever 13 does not operate, and the foot lever 15 does not operate, either. In this state, the front brake device 30 and the rear brake device 40 operate.

As shown in Fig. 8, when the rider grips on the right lever 11, the right lever 11 turns around the right turning shaft portion 4a provided on the handlebar 4 in the clockwise direction. The right lever 11 pushes the right pushing portion 16 and turns the right pushing portion 16 around the right turning shaft portion 4a in the clockwise direction. The front master cylinder 12 is pushed in association with the right turning shaft portion 4a turning. As a result, a hydraulic pressure generated by the front master cylinder 12 is transmitted to the front brake caliper 32, whereby a braking force is applied to the front wheel 2.

At this time, even though the right pushing portion 16 turns in the clockwise direction, no force is transmitted to the sixth component 56. The sixth component 56 is a component independent of the right pushing portion 16. The sixth component 56 has an elongated hole 56a extending in the left-and-right direction, and the coupling shaft portion 16a is inserted through this elongated hole 56a in such a manner as to move freely therein. A force attempting to pull the sixth component 56 to the left is applied to the sixth component 56 at all times. As a result, when the sixth component 56 moves to the left by activating the left lever 13 and the foot lever 15, the sixth component 56 turns the right pushing portion 16 in the clockwise direction via the coupling shaft portion 16a. However, even though the right lever 11 is activated to turn the right pushing portion 16 in the clockwise direction, the coupling shaft portion 16a only moves to the right within the elongated hole 56a in the sixth component 56, and hence, the right pushing portion 16 never moves the sixth component 56 to the left.

In this way, when the rider operates the right lever 11, the front master cylinder 12 is activated to operate with the left lever 13 and the foot lever 15 kept inoperative, whereby a braking force is applied to the front wheel 2.

### <Operation Activating Front Master Cylinder 12 to Operate>

As has been described above, according to the embodiment, the vehicle brake system 10 includes:
a first master cylinder (the front master cylinder 12) configured to activate a first brake device (the front brake device 30) for applying a braking force to any one of the front wheel 2 or the rear wheel 3 of the vehicle 1;
the right lever 11 (a first operator) configured to be operated by the hand of the user;
the left lever 13 (a second operator) configured to be operated by the hand or the foot of the user; and
the foot lever 15 (a third operator) configured to be operated by the foot of the user, and the first master cylinder is configured to be operated according to a resultant force of forces applied to the first operator, the second operator, and the third operator.

In other words, in the vehicle brake system 10 according to the embodiment, as described by reference to Fig. 5, the front master cylinder 12 can be activated to operate by operating the left lever 13. As described by reference to Fig. 6, the front master cylinder 12 can be activated to operate by operating the foot lever 15. As described by reference to Fig. 8, the front master cylinder 12 can be activated to operate by operating the right lever 11.

In addition, in the vehicle brake system 10 according to the embodiment described above, the front master cylinder 12 is configured to be operated by means of the resultant force of the forces applied to the right lever 11, the left lever 13, and the foot lever 15. That is, the front master cylinder 12 is activated to operate by means of a resultant force of the forces applied to the right lever 11 and the left lever 13. The front master cylinder 12 is activated to operate by means of a resultant force of the forces applied to the left lever 13 and the foot lever 15. The front master cylinder 12 is activated to operate by means of a resultant force of the forces applied to the right lever 11 and the foot lever 15. The front master cylinder 12 is activated to operate by means of the resultant force of the forces applied to the right lever 11, the left lever 13, and the foot lever 15.

The fact that the front master cylinder 12 is activated to operate by means of the resultant force of the forces applied to the right lever 11, the left lever 13, and the foot lever 15 will be described. As has been described above, the front master cylinder 12 is activated to operate by turning of the right pushing portion 16. The right pushing portion 16 is moved by at least an operation force applied to the right lever 11. In the description made above, further, the right pushing portion 16 is described as being moved by means of an operation force applied to the left lever 13, or an operation force applied to the foot lever 15. Next, the fact that the right pushing portion 16 is also moved by means of a resultant force of a force applied to the right lever 11, a force applied to the left lever 13, and a force applied to the foot lever 15.

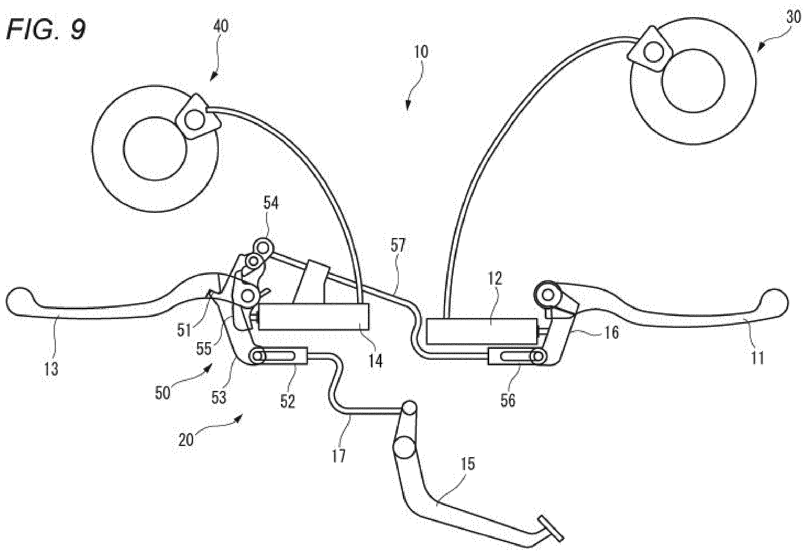

Fig. 9 is a schematic drawing showing the whole of the vehicle brake system 10 when the right lever 11, the left lever 13, and the foot lever 15 are all operated. For example, when the rider attempts to generate a maximum braking force in the front wheel 2 and the rear wheel 3, the rider operates all of the right lever 11, the left lever 13, and the foot lever 15.

In this state, when the second component 52 moves to the right by operating the foot lever 15, the second component 52 applies to the third component 53 a force attempting to turn the third component 53 around the fixed axis A in the clockwise direction. Due to the left lever 13 being operated, the first component 51 applies to the third component 53 a force attempting to turn the third component 53 around the fixed axis A in the clockwise direction. That is, a resultant force of the force attributed to the operation of the foot lever 15 and the force attributed to the operation of the left lever 13 is applied to the third component 53. In other words, the left pushing mechanism 50 is moved by means of the resultant force of the forces of the left lever 13 and the foot lever 15.

The third component 53 applies to the fourth component 54 force attempting to revolve the fourth component 54 around the fixed axis A in the counterclockwise direction. This force applied to the fourth component 54 acts in such a way as to pull the coupling shaft portion 16a to the left via the interlocking wire 57 and the sixth component 56. On the other hand, the operation force inputted into the right lever 11 is transmitted to the right pushing portion 16. In other words, the force attributed to the operation of the foot lever 15, the force attributed to the third component 53 to which the resultant force of the force attributed to the operation of the foot lever 15 and the force attributed to the operation of the left lever 13, and the force attributed to the operation of the right lever 11 are applied to the right pushing portion 16 configured to activate the front master cylinder 12. To summarize what has been described above, the front master cylinder 12 is configured to be operated by means of the resultant force of the right lever 11, the left lever 13, and the foot lever 15.

The case where only the right lever 11 is activated to operate, which is described above, constitutes a case where an operation force of a certain magnitude (X[N]) is inputted into the right lever 11, an operation force of 0 (zero) [N] is inputted into the left lever 13, and an operation force of 0 (zero) [N] is inputted into the foot lever 15. In this case, a force corresponding to X+0+0=X[N] is inputted into the front master cylinder 12. The force inputted into the front master cylinder 12 is not always the total of the forces that are inputted individually into the right lever 11, the left lever 13, and the foot lever 15. The force inputted into the front master cylinder 12 is proportional to a total of magnitudes of forces that are inputted individually into the right lever 11, the left lever 13, and the foot lever 15.

To be more accurate, in the event that the force with which the foot lever 15 turns the third component 53 is smaller than the force with which the left lever 13 turns the third component 53, there occurs no such situation that the second component 52 pulls the coupling shaft portion 53b to the right. Due to this, depending upon the relationship in magnitude among the forces inputted individually into the right lever 11, the left lever 13, and the foot lever 15, there may be a case where the operation force inputted into the foot lever 15 does not influence the operation of the front master cylinder 12.

In addition, in the event that the force with which the foot lever 15 and the left lever 13 pull the sixth component 56 to the left is smaller than the force with which the right lever 11 turns the right pushing portion 16, there occurs no such situation that the sixth component 56 pulls the coupling shaft portion 16a to the left. Due to this, depending upon the relationship in magnitude among the forces inputted individually into the right lever 11, the left lever 13, and the foot lever 15, there may be a case where the operation forces inputted into the foot lever 15 and the left lever 13 do not influence the operation of the front master cylinder 12.

To be more accurate, the vehicle brake system 10 is configured so that there is a case where the vehicle brake system 10 is operated according to the resultant force of the forces applied to the foot lever 15, the left lever 13, and the right lever 11 sometimes.

The front master cylinder 12 is preferably configured to be operated by means of the resultant force of the forces applied to the foot lever 15, the left lever 13, and the right lever 11 at all times. Then, for example, it is preferable to configure so that the force with which the foot lever 15 turns the third component 53 becomes greater than the force with which the left lever 13 turns the third component 53 when the foot lever 15 moves to its extreme position in a stroke. Additionally, it is preferable to configure so that the forces with which the foot lever 15 and the left lever 13 pull the sixth component 56 to the left become greater than the force with which the right lever 11 turns the right pushing portion 16 when the foot lever 15 moves to its extreme position in a stroke and the left lever 13 moves to its extreme position in a stroke.

According to the vehicle brake system 10 of this embodiment, the front master cylinder 12 can be activated to operate by operating any one of the three operators of the right lever 11, the left lever 13, and the foot lever 15, whereby the handling properties of the vehicle brake system 10 by the use can be enhanced. For example, when the user is accustomed to operating the brake system on a scooter, the user can activate the front brake device 30 and the rear brake device 40 to operate by using the right lever 11 and the left lever 13. In addition, when the user is accustomed to operating the brake system on a four-wheeled vehicle, the user can activate the front brake device 30 and the rear brake device 40 to operate by using the foot lever 15 and the right lever 11 or even by using only the foot lever 15. As a result, the vehicle brake system 10 of this embodiment is easy to be used by not only a user who is accustomed to operating the brake system on a scooter but also a user who is accustomed to operating the brake system on a four-wheeled vehicle.

Since the front master cylinder 12 is operated according to the resultant force of the forces applied to the right lever 11, the left lever 13, and the foot lever 15, an excessive force does not have to be applied to the single operator in order to output a great force from the front master cylinder 12. In other words, in a vehicle brake system differing from the present invention, when a great force from the front master cylinder is needed, for example, it may be required to input a great force into the right lever when the front master cylinder is operated by only the right lever. However, according to the vehicle brake system 10, by using the right lever 11 and the foot lever 15 simultaneously, a relatively small force inputted individually into the right lever 11 and the foot lever 15, the front master cylinder 12 can be allowed to output a similar great force.

The vehicle brake system 10 according to this embodiment includes the right pushing portion 16 (a first mechanical element) configured to be moved by means of the force by at least the right lever 11 to operate the front master cylinder 12 and the left pushing mechanism 50 configured to be moved by means of the resultant force of the forces applied to the left lever 13 and the foot lever 15 to move the right pushing portion 16.

The first master cylinder is configured to be operated according to the resultant force of the forces applied to the first operator, the second operator, and the third operator through the mechanical mechanism. When compared with a case where the first master cylinder is configured to be operated according to the resultant force of the forces applied to the first operator, the second operator, and the third operator through an electronic mechanism, the necessity of a complex control is obviated.

The vehicle brake system 10 according to the embodiment includes the rear master cylinder 14 configured to operate the rear brake device for applying a braking force to the rear wheel 3, and the rear master cylinder 14 is configured to be operated according to the resultant force of the forces applied to the left lever 13 (the second operator) and the foot lever 15 (the third operator).

In the vehicle brake system 10 according to this embodiment, the left pushing mechanism 50 is configured to be moved by means of the resultant force of the forces applied to the left lever 13 and the foot lever 15 to operate the rear master cylinder 14.

As a result, an excessive force does not have to be applied to the single operator in order to output a great force from the rear master cylinder 14.

In the vehicle brake system 10 according to this embodiment, the left pushing mechanism 50 includes:
the first component 51 (a first element) configured to be moved by means of a force applied to the left lever 13 independently of a force by the foot lever 15;
the second component 52 (a second element) configured to be moved by means of a force applied to the foot lever 15 independently of a force by the left lever 13;
the third component 53 (a third element) configured to be moved by the first component 51 or the second component 52; and
the fourth component 54 (a fourth element) configured to be moved by the third component 53 to operate the front master cylinder 12.

As a result of the configuration described above, the front master cylinder 12 can be activated to operate by operating any one of the three operators of the right lever 11, the left lever 13 and the foot lever 15 with the simple configuration. Additionally, the front master cylinder 12 can be operated according to the resultant force of the forces applied to the right lever 11, the left lever 13, and the foot lever 15.

The vehicle brake system 10 according to this embodiment includes the fifth component 55 configured to be moved by the fourth component 54 to operate the rear master cylinder 14. As a result of the configuration described above, the front master cylinder 12 and the rear master cylinder 14 can both be activated to operate by operating the left lever 13 or the foot lever 15.

In the vehicle brake system 10 according to this embodiment, the fourth component 54 is connected to the right pushing portion 16 with the wire (the interlocking wire 57). The movement of the fourth component 54 can be transmitted to the right pushing portion 16 in an ensured fashion through the simple configuration of the interlocking wire 57.

In the vehicle brake system 10 according to this embodiment, the second component 52 is connected to the foot lever 15 with the wire (the foot wire 17). The movement of the foot lever 15 can be transmitted to the second component 52 in an ensured fashion through the simple configuration of the foot wire 17. In particular, the foot lever 15 is provided far away of the position where the second component 52 is provided, and other members are provided between the foot lever 15 and the second component 52. As a result, the movement of the foot lever 15 can be transmitted to the second component 52 in an ensured fashion while avoiding an interference with other members by connecting the foot lever 15 and the second component 52 with the wire.

In the vehicle brake system 10 according to this embodiment, the right pushing portion 16 is configured in such a manner as not to transmit an operation force of the right lever 11 to the left pushing mechanism 50.

The first elongated hole 56a is provided in one (the sixth component 56 of the left pushing mechanism 50) of the first mechanical element (the right pushing portion 16) and the second mechanical element (the left pushing mechanism 50),
a first connector (the coupling shaft portion 16a) configured to move within the first elongated hole 56a is provided on the other (the coupling shaft portion 16a) of the first mechanical element (the right pushing portion 16) and the second mechanical element (the left pushing mechanism 50), and
when the first mechanical element (the right pushing portion 16) is displaced by means of the operation force of the first operator (the right lever 11), the fist connector (the coupling shaft portion 16a) moves within the first elongated hole 56a, so that the first mechanical element (the right pushing portion 16) is prevented from transmitting the operation force of the first operator (the right lever 11) to the second mechanical element (the left pushing mechanism 50).

The sixth component 56 is a component independent of the right pushing portion 16. The sixth component 56 has an elongated hole 56a extending in the left-and-right direction, and the coupling shaft portion 16a is inserted through this elongated hole 56a in such a manner as to move freely therein. A force attempting to pull the sixth component 56 to the left is applied to the sixth component 56 at all times. As a result, when the sixth component 56 moves to the left, the sixth component 56 turns the right pushing portion 16 in the clockwise direction via the coupling shaft portion 16a. However, even though the right pushing portion 16 turns in the clockwise direction, the coupling shaft portion 16a only moves to the right within the elongated hole 56a in the sixth component 56, and hence, there occurs no such situation that the right pushing portion 16 moves the sixth component 56 to the left.

In the vehicle brake system 10 according to this embodiment, the second component 52 is configured in such a manner as not to transmit the operation force of the left lever 13 to the foot lever 15.

The second elongated hole 52a is provided in one (the second component 52) of the second element (the second component 52) and the third operator (the third component 53),
a second connector (the coupling shaft portion 53b) configured to move within the second elongated hole 52a is provided on the other (the third component 53) of the second element (the second component 52) and the third operator (the third component), and
when the second element (the second component 52) is displaced by means of the operation force of the second operator (the left lever 13), the second connector (the coupling shaft portion 53b) moves within the second elongated hole 52a, so that the second element (the second component 52) is prevented from transmitting the operation force of the second operator (the left lever 13) to the third operator (the fool lever 15).

The second component 52 is a component independent of the left lever 13. The second component 52 has the elongated hole 52a extending in the left-and-right direction, and the coupling shaft portion 53b configured to be activated to operate by the left lever 13 is inserted through the elongated hole 52a in such a manner as to move therein. The force attempting to turn third component 53 in the counterclockwise direction is applied to the third component 53 at all times, and the coupling shaft portion 53b is biased to the right at all times. As a result, when the second component 52 is pulled to the right by the foot lever 15, the second component 52 moves the coupling shaft portion 53b to the right and turns the third component 53 in the counterclockwise direction. However, even though the third component 53 turns in the counterclockwise direction, the coupling shaft portion 53b only moves to the right within the elongated hole 52a in the second component 52, and there occurs no such situation that the third component 53 moves the second component 52 to the right. In other words, the second component 52 is configured in such a manner as not to transmit the operation force of the left lever 13 to the foot lever 15.

According to the vehicle brake system 10 described above, even in the event that the front brake hose 33 or the interlocking wire 57 is damaged, the rear brake device 40 can be activated to operate.

As shown in Fig. 5, a stopper 53c is provided on the third component 53. The stopper 53c is a portion projecting from the third component 53 upwards above the surface of a sheet of paper on which Fig. 5 is drawn so as to be brought into abutment with the fourth component 54. In the event that the front brake hose 33 or the interlocking wire 57 is damaged, no reaction force is applied from the interlocking wire 57 to the fourth component 54. In this event, the stopper 53c is brought into abutment with the fourth component 54 to thereby prevent the fourth component 54 from turning around the moving axis B in the counterclockwise direction. As a result, even with no reaction force applied from the interlocking wire 57, when the left lever 13 or the foot lever 15 is operated, a force is transmitted from the fourth component 54 to the third component 53 to thereby push the rear master cylinder 14.

According to the vehicle brake system 10 described above, even in the event that the rear brake hose 43 is damaged, the front brake device 30 can be activated to operate. The operation of the right lever 11 is transmitted to the front master cylinder 12 irrespective of the state of the rear brake hose 43. As a result, even in the event that the rear brake hose 43 is damaged, the front brake device 30 can be activated to operate.

In the embodiment described above, while the second operator is described as being the left lever 13 that can be operated by the left hand of the rider, the second operator may be configured as a second foot lever that can be operated by a different foot of the rider from the foot by which the foot lever 15, which is the third operator, is operated.

In the embodiment described above, while the vehicle brake system 10 is described as being mounted on the motorcycle including the one front wheel and the one rear wheel, the invention is not limited to this.

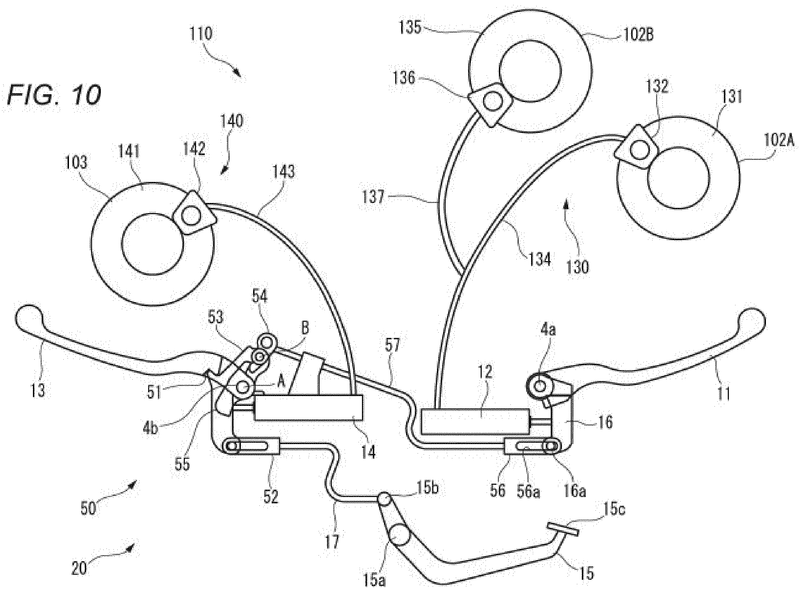

As shown in Fig. 10, the vehicle brake system 110 may be mounted on a vehicle 101 with two front wheels that includes a right front wheel 102A and a left front wheel 102B, and one rear wheel 103. In this case, a first brake device 130 that is activated by a first master cylinder 12 is preferably configured to apply a braking force to the right front wheel 102A and the left front wheel 102B.

In this case, for example, the first brake device 130 may include a right front brake caliper 132 configured to apply a frictional force to a right front brake disc 131 that rotates together with the right front wheel 102A, a left front brake caliper 136 configured to apply a frictional force to a left front brake disc 135 that rotates together with the left front wheel 102B, a right front brake hose 134 that connects the front master cylinder 12 with the right front brake caliper 132, and a left front brake hose 137 that connects the front master cylinder 12 with the left front brake caliper 136. In the example shown in the figure, part of the right front brake hose 134 and part of the left front brake hose 137 are made up of a common hose. Being different from this configuration, the right front brake hose 134 and the left front brake hose 137 may each be made up of an independent hose.

Alternatively, being different from the example shown in Fig. 10, the vehicle brake system may be mounted on a vehicle with two rear wheels that includes one front wheel, and a right rear wheel and a left rear wheel.

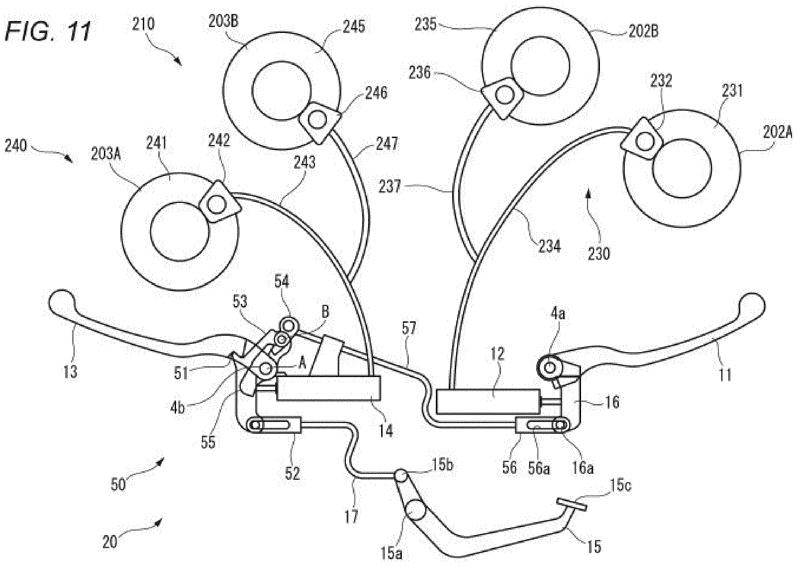

Further as shown in Fig. 11, a vehicle brake system 210 may be mounted on a four-wheeled vehicle including a right front wheel 202A, a left front wheel 202B, a right rear wheel 203A, and a left rear wheel 203B.

In this case, for example, a first brake device 230 may include a right front brake caliper 232 configured to apply a frictional force to a right front brake disc 231 that rotates together with the right front wheel 202A, a left front brake caliper 236 configured to apply a frictional force to a left front brake disc 235 that rotates together with the left front wheel 202B, a right front brake hose 234 that connects a front master cylinder 12 with the right front brake caliper 232, and a left front brake hose 237 that connects the front master cylinder 12 with the left front brake caliper 236.

A second brake device 240 may include a right rear brake caliper 242 configured to apply a frictional force to a right rear brake disc 241 that rotates together with the right rear wheel 203A, a left rear brake caliper 246 configured to apply a frictional force to a left rear brake disc 245 that rotates together with the left rear wheel 203B, a right rear brake hose 244 that connects a rear master cylinder 14 with the right rear brake caliper 242, and a left rear brake hose 247 that connects the rear master cylinder 14 with the left rear brake caliper 246.

### (Other Embodiments)

While the embodiments of the invention have been described heretofore, the embodiments constitute only examples in carrying out the invention.

In the embodiment described above, the front master cylinder 12 is described as being activated to operate by the right lever 11, and the front master cylinder 12 and the rear master cylinder 14 are described as being activated to operate by the left lever 13 and the foot lever 15; however, the invention is not limited to this configuration. The front master cylinder may be activated to operate by the left lever, and the front master cylinder and the rear master cylinder may be activated to operate by the right lever and the foot lever.

When the left lever 13 and the foot lever 15 are operated, the front master cylinder 12 may be activated to operate after the rear master cylinder 14 is activated to operate, or the rear master cylinder 14 may be activated to operate after the front master cylinder 12 is activated to operate. Alternatively, the front master cylinder 12 and the rear master cylinder 14 may be activated to operate simultaneously when the left lever 13 or the foot lever 15 is operated.

### [Description of Reference Numerals]

- 1: Vehicle
- 2: Front wheel
- 3: Rear wheel
- 4: Handlebar
- 4a: Right turning shaft portion
- 4b: Fixed shaft portion
- 5: Power unit
- 5a: Engine
- 5b: Driving force transmission device
- 6: Steering shaft
- 7: Front suspension
- 10: Vehicle brake system
- 11: Right lever (first operator)
- 12: Front master cylinder (first master cylinder)
- 13: Left lever (second operator)
- 14: Rear master cylinder (second master cylinder)
- 15: Foot lever (third operator)
- 16: Right pushing portion (first mechanical element)
- 17: Foot wire
- 20: Brake operation mechanism
- 30: Front brake device (first brake device)
- 31: Front brake disc
- 32: Front brake caliper
- 33: Front brake hose
- 40: Rear brake device (second brake device)
- 41: Rear brake disc
- 42: Rear brake caliper
- 43: Rear brake hose
- 50: Left pushing mechanism (second mechanical element)
- 51: First component
- 52: Second component
- 52a: Elongated hole
- 53: Third component
- 53a: Movable shaft portion
- 53b: Coupling shaft portion
- 53c: Stopper
- 54: Fourth component
- 55: Fifth component
- 56: Sixth component
- 56a: Elongated hole
- 57: Interlocking wire

## Claims

1. A vehicle brake system (10, 110, 210) comprising:
a first master cylinder (12) configured to activate a first brake device (30, 130, 230) for applying a braking force to at least one of a front wheel (2) or a rear wheel (3) of a vehicle (1);
a first operator (11) configured to be operated by a hand of a user;
a second operator (13) configured to be operated by a hand or a foot of the user; and
a third operator (15) configured to be operated by a foot of the user,
**characterized in that**
the first master cylinder (12) is configured to be operated according to a resultant force of forces applied to the first operator (11), the second operator (13), and the third operator (15).

2. The vehicle brake system (10, 110, 210) according to claim 1, comprising:
a second master cylinder (14) configured to activate a second brake device (40, 140, 240) for applying a braking force to the other of the front wheel (2) or the rear wheel (3) of the vehicle (1),
wherein the second master cylinder (14) is configured to be operated according to a resultant force of forces applied to the second operator (13) and the third operator (15).

3. The vehicle brake system (10, 110, 210) according to claim 1,
wherein at least one of the front wheel (2) or the rear wheel (3) comprises a right wheel and a left wheel, and
wherein the first brake device (30, 130, 230) applies a braking force to the right wheel and the left wheel.

4. The vehicle brake system (110, 210) according to claim 1,
wherein the front wheel comprises a right front wheel (102A, 202A) and a left front wheel (102B, 202B), and
wherein the first brake device (130, 230) applies a braking force to the right front wheel (102A, 202A) and the left front wheel (102B, 202B).

5. The vehicle brake system (10, 110, 210) according to claim 1, comprising:
a first mechanical element (16) configured to be moved by at least a force applied to the first operator (11) to operate the first master cylinder (12); and
a second mechanical element (50) configured to be moved by a resultant force of forces applied to the second operator (13) and the third operator (15) to move the first mechanical element (16).

6. The vehicle brake system (10, 110, 210) according to claim 5,
wherein the second mechanical element (50) comprises:
a first element (51) configured to move according to a force applied to the second operator (13) independently of a force by the third operator (15);
a second element (52) configured to move according to a force applied to the third operator (15) independently of a force by the second operator (13);
a third element (53) configured to be moved by the first element (51) or the second element (52); and
a fourth element (54) configured to be moved by the third operator (15) to operate the first master cylinder (12).

7. The vehicle brake system (10, 110, 210) according to claim 6, comprising:
a second master cylinder (14) configured to activate a second brake device (40, 140, 240) for applying a braking force to the other of the front wheel (2) or the rear wheel (3); and
a fifth element (55) configured to be moved by the fourth element (54) to operate the second master cylinder (14).

8. The vehicle brake system (10, 110, 210) according to claim 6,
wherein the fourth element (54) is connected to the first mechanical element (16) with a wire (57).

9. The vehicle brake system (10, 110, 210) according to claim 6,
wherein the second element (52) is connected to the third operator (15) with a wire (17).

10. The vehicle brake system (10, 110, 210) according to claim 5,
wherein a first elongated hole (56a) is provided in one of the first mechanical element (16) and the second mechanical element (50),
wherein a first connector (16a) is provided in the other of the first mechanical element (16) and the second mechanical element (50), the first connector (16a) being configured to move within the first elongated hole (56a), and
wherein when the first mechanical element (16) is displaced by an operating force of the first operator (11), the first mechanical element (16) is prevented from transmitting the operating force of the first operator (11) to the second mechanical element (50) by the first connector (16a) moving within the first elongated hole (56a).

11. The vehicle brake system (10, 110, 210) according to claim 6,
wherein a second elongated hole (52a) is provided in one of the second element (52) and the third operator (15),
wherein a second connector (53b) is provided in the other of the second element (52) and the third operator (15), the second connector (53b) being configured to move within the second elongated hole (52a), and
wherein when the second element (52) is displaced by an operating force of the second operator (13), the second element (52) is prevented from transmitting the operating force of the second operator (13) to the third operator (15) by the second connector (53b) moving within the second elongated hole (52a).

12. A vehicle comprising:
a front wheel (2);
a rear wheel (3); and
the vehicle brake system (10, 110, 210) according to claim 1 comprising a second master cylinder (14) configured to activate a first brake device (30, 130, 230) for applying a braking force to one of the front wheel (2) or the rear wheel (3).

## Patentansprüche

1. Fahrzeug-Bremssystem (10, 110, 210), das umfasst:
einen ersten Hauptzylinder (12), der so ausgeführt ist, dass er eine erste Bremsvorrichtung (30, 130, 230) aktiviert, um eine Bremskraft auf ein Vorderrad (2) oder/und ein Hinterrad (3) eines Fahrzeugs (1) auszuüben;
eine erste Betätigungseinrichtung (11), die so ausgeführt ist, dass sie mit einer Hand eines Benutzers betätigt wird;
eine zweite Betätigungseinrichtung (13), die so ausgeführt ist, dass sie mit einer Hand oder einem Fuß des Benutzers betätigt wird; und
eine dritte Betätigungseinrichtung (15), die so ausgeführt ist, dass sie mit einem Fuß des Benutzers betätigt wird;
**dadurch gekennzeichnet, dass**
der erste Hauptzylinder (12) so ausgeführt ist, dass er entsprechend einer resultierenden Kraft von Kräften betätigt wird, die auf die erste Betätigungseinrichtung (11), die zweite Betätigungseinrichtung (13) und die dritte Betätigungseinrichtung (15) ausgeübt werden.

2. Fahrzeug-Bremssystem (10, 110, 210) nach Anspruch 1, das umfasst:
einen zweiten Hauptzylinder (14), der so ausgeführt ist, dass er eine zweite Bremsvorrichtung (40, 140, 240) aktiviert, um eine Bremskraft auf das andere von dem Vorderrad (2) und dem Hinterrad (3) des Fahrzeugs (1) auszuüben;
wobei der zweite Hauptzylinder (14) so ausgeführt ist, dass er entsprechend einer resultierenden Kraft von Kräften betätigt wird, die auf die zweite Betätigungseinrichtung (13) und die dritte Betätigungseinrichtung (15) ausgeübt werden.

3. Fahrzeug-Bremssystem (10, 110, 210) nach Anspruch 1,
wobei das Vorderrad (2) oder/und das Hinterrad (3) ein rechtes Rad und ein linkes Rad umfasst/umfassen, und
die erste Bremsvorrichtung (30, 130, 230) eine Bremskraft auf das rechte Rad und das linke Rad ausübt.

4. Fahrzeug-Bremssystem (110, 210) nach Anspruch 1,
wobei das Vorderrad ein rechtes Vorderrad (102A, 202A) und ein linkes Vorderrad (102B, 202B) umfasst, und
die erste Bremsvorrichtung (130, 230) eine Bremskraft auf das rechte Vorderrad (102A, 202A) und das linke Vorderrad (102B, 202B) ausübt.

5. Fahrzeug-Bremssystem (10, 110, 210) nach Anspruch 1, das umfasst:
ein erstes mechanisches Element (16), das so ausgeführt ist, dass es durch wenigstens eine auf die erste Betätigungseinrichtung (11) ausgeübte Kraft zum Betätigen des ersten Hauptzylinders (12) bewegt wird; sowie
ein zweites mechanisches Element (50), das so ausgeführt ist, dass es durch eine resultierende Kraft von auf die zweite Betätigungseinrichtung (13) und die dritte Betätigungseinrichtung (15) ausgeübten Kräften zum Betätigen des ersten mechanischen Elementes (16) bewegt wird.

6. Fahrzeug-Bremssystem (10, 110, 210) nach Anspruch 5,
wobei das zweite mechanische Element (50) umfasst:
ein erstes Element (51), das so ausgeführt ist, dass es sich entsprechend einer auf die zweite Betätigungseinrichtung (13) ausgeübten Kraft unabhängig von einer Kraft der dritten Betätigungseinrichtung (15) bewegt;
ein zweites Element (52), das so ausgeführt ist, dass es sich entsprechend einer auf die dritte Betätigungseinrichtung (15) ausgeübten Kraft unabhängig von einer Kraft der zweiten Betätigungseinrichtung (13) bewegt;
ein drittes Element (53), das so ausgeführt ist, dass es durch das erste Element (51) oder das zweite Element (52) bewegt wird; und
ein viertes Element (54), das so ausgeführt ist, dass es durch die dritte Betätigungseinrichtung (15) zum Betätigen des ersten Hauptzylinders (12) bewegt wird.

7. Fahrzeug-Bremssystem (10, 110, 210) nach Anspruch 6, das umfasst:
einen zweiten Hauptzylinder (14), der so ausgeführt ist, dass er eine zweite Bremsvorrichtung (40, 140, 240) aktiviert, um eine Bremskraft auf das andere von dem Vorderrad (2) und dem Hinterrad (3) auszuüben; sowie
ein fünftes Element (55), das so ausgeführt ist, dass es durch das vierte Element (54) zum Betätigen des zweiten Hauptzylinders (14) bewegt wird.

8. Fahrzeug-Bremssystem (10, 110, 210) nach Anspruch 6,
wobei das vierte Element (54) mittels eines Drahtes (57) mit dem ersten mechanischen Element (16) verbunden ist.

9. Fahrzeug-Bremssystem (10, 110, 210) nach Anspruch 6,
wobei das zweite Element (52) mittels eines Drahtes (17) mit der dritten Betätigungseinrichtung (15) verbunden ist.

10. Fahrzeug-Bremssystem (10, 110, 210) nach Anspruch 5,
wobei ein erstes Langloch (56a) in dem ersten mechanischen Element (16) oder dem zweiten mechanischen Element (50) vorhanden ist,
ein erster Verbinder (16a) in dem anderen von dem ersten mechanischen Element (16) und dem zweiten mechanischen Element (50) vorhanden ist, und der erste Verbinder (16a) so ausgeführt ist, dass er sich im Inneren des ersten Langlochs (56a) bewegt, und
wenn das erste mechanische Element (16) durch eine Betätigungskraft der ersten Betätigungseinrichtung (11) verschoben wird, das erste mechanische Element (16) durch den ersten Verbinder (16a), der sich im Inneren des ersten Langlochs (56a) bewegt, daran gehindert wird, die Betätigungskraft der ersten Betätigungseinrichtung (11) auf das zweite mechanische Element (50) zu übertragen.

11. Fahrzeug-Bremssystem (10, 110, 210) nach Anspruch 6,
wobei ein zweites Langloch (52a) in dem zweiten mechanischen Element (52) oder der dritten Betätigungseinrichtung (15) vorhanden ist,
ein zweiter Verbinder (53b) in dem anderen von dem zweiten Element (52) und der dritten Betätigungseinrichtung (15) vorhanden ist, und der zweite Verbinder (53b) so ausgeführt ist, dass er sich im Inneren des zweiten Langlochs (52a) bewegt, und
wenn das zweite Element (52) durch eine Betätigungskraft der zweiten Betätigungseinrichtung (13) verschoben wird, das zweite Element (52) durch den zweiten Verbinder (53b), der sich im Inneren des zweiten Langlochs (52a) bewegt, daran gehindert wird, die Betätigungskraft der zweiten Betätigungseinrichtung (13) auf die dritte Betätigungseinrichtung (15) zu übertragen.

12. Fahrzeug, das umfasst:
ein Vorderrad (2);
ein Hinterrad (3); sowie
das Fahrzeug-Bremssystem (10, 110, 210) nach Anspruch 1, das einen zweiten Hauptzylinder (14) umfasst, der so ausgeführt ist, dass er eine erste Bremsvorrichtung (30, 130, 230) aktiviert, um eine Bremskraft auf das Vorderrad (2) oder das Hinterrad (3) auszuüben.

## Revendications

1. Système de freinage de véhicule (10, 110, 210) comprenant :
un premier maître-cylindre (12) configuré pour activer un premier dispositif de freinage (30, 130, 230) afin d'appliquer une force de freinage à au moins une roue parmi une roue avant (2) et une roue arrière (3) d'un véhicule (1) ;
un premier actionneur (11) configuré pour être actionné par une main d'un utilisateur ;
un deuxième actionneur (13) configuré pour être actionné par une main ou un pied de l'utilisateur ; et
un troisième actionneur (15) configuré pour être actionné par un pied de l'utilisateur,
**caractérisé en ce que** le premier maître-cylindre (12) est configuré pour être actionné conformément à une force résultante de forces appliquées au premier actionneur (11), au deuxième actionneur (13) et au troisième actionneur (15) .

2. Système de freinage de véhicule (10, 110, 210) selon la revendication 1, comprenant :
un deuxième maître-cylindre (14) configuré pour activer un deuxième dispositif de freinage (40, 140, 240) afin d'appliquer une force de freinage à l'autre roue parmi la roue avant (2) et la roue arrière (3) du véhicule (1),
dans lequel le deuxième maître-cylindre (14) est configuré pour être actionné conformément à une force résultante de forces appliquées au deuxième actionneur (13) et au troisième actionneur (15).

3. Système de freinage de véhicule (10, 110, 210) selon la revendication 1,
dans lequel au moins une roue parmi la roue avant (2) et la roue arrière (3) comprend une roue droite et une roue gauche, et
dans lequel le premier dispositif de freinage (30, 130, 230) applique une force de freinage à la roue droite et à la roue gauche.

4. Système de freinage de véhicule (110, 210) selon la revendication 1,
dans lequel la roue avant comprend une roue avant droite (102A, 202A) et une roue avant gauche (102B, 202B), et
dans lequel le premier dispositif de freinage (130, 230) applique une force de freinage à la roue avant droite (102A, 202A) et à la roue avant gauche (102B, 202B).

5. Système de freinage de véhicule (10, 110, 210) selon la revendication 1, comprenant :
un premier élément mécanique (16) configuré pour être déplacé par au moins une force appliquée au premier actionneur (11) afin d'actionner le premier maître-cylindre (12) ; et
un deuxième élément mécanique (50) configuré pour être déplacé par une force résultante de forces appliquées au deuxième actionneur (13) et au troisième actionneur (15) pour déplacer le premier élément mécanique (16).

6. Système de freinage de véhicule (10, 110, 210) selon la revendication 5, dans lequel le deuxième élément mécanique (50) comprend :
un premier élément (51) configuré pour se déplacer selon une force appliquée au deuxième actionneur (13) indépendamment d'une force exercée par le troisième actionneur (15) ;
un deuxième élément (52) configuré pour se déplacer selon une force appliquée au troisième actionneur (15) indépendamment d'une force exercée par le deuxième actionneur (13) ;
un troisième élément (53) configuré pour être déplacé par le premier élément (51) ou le deuxième élément (52) ; et
un quatrième élément (54) configuré pour être déplacé par le troisième actionneur (15) afin d'actionner le premier maître-cylindre (12).

7. Système de freinage de véhicule (10, 110, 210) selon la revendication 6, comprenant :
un deuxième maître-cylindre (14) configuré pour activer un deuxième dispositif de freinage (40, 140, 240) afin d'appliquer une force de freinage à l'autre roue parmi la roue avant (2) et la roue arrière (3) ; et
un cinquième élément (55) configuré pour être déplacé par le quatrième élément (54) afin d'actionner le deuxième maître-cylindre (14).

8. Système de freinage de véhicule (10, 110, 210) selon la revendication 6,
dans lequel le quatrième élément (54) est connecté au premier élément mécanique (16) par un câble (57).

9. Système de freinage de véhicule (10, 110, 210) selon la revendication 6,
dans lequel le deuxième élément (52) est connecté au troisième actionneur (15) par un câble (17).

10. Système de freinage de véhicule (10, 110, 210) selon la revendication 5,
dans lequel un premier trou oblong (56a) est pourvu dans un élément parmi le premier élément mécanique (16) et le deuxième élément mécanique (50),
dans lequel un premier connecteur (16a) est pourvu dans l'autre élément parmi le premier élément mécanique (16) et le deuxième élément mécanique (50), le premier connecteur (16a) étant configuré pour se déplacer dans le premier trou oblong (56a), et
dans lequel, quand le premier élément mécanique (16) est déplacé par une force d'actionnement du premier actionneur (11), le premier élément mécanique (16) est empêché de transmettre la force d'actionnement du premier actionneur (11) au deuxième élément mécanique (50) par un déplacement du premier connecteur (16a) dans le premier trou oblong (56a).

11. Système de freinage de véhicule (10, 110, 210) selon la revendication 6,
dans lequel un deuxième trou oblong (52a) est pourvu dans un composant parmi le deuxième élément (52) et le troisième actionneur (15),
dans lequel un deuxième connecteur (53b) est pourvu dans l'autre composant parmi le deuxième élément (52) et le troisième actionneur (15), le deuxième connecteur (53b) étant configuré pour se déplacer dans le deuxième trou oblong (52a), et
dans lequel, quand le deuxième élément (52) est déplacé par une force d'actionnement du deuxième actionneur (13), le deuxième élément (52) est empêché de transmettre la force d'actionnement du deuxième actionneur (13) au troisième actionneur (15) par un déplacement du deuxième connecteur (53b) dans le deuxième trou oblong (52a).

12. Véhicule comprenant :
une roue avant (2) ;
une roue arrière (3) ; et
le système de freinage de véhicule (10, 110, 210) selon la revendication 1 comprenant un deuxième maître-cylindre (14) configuré pour activer un premier dispositif de freinage (30, 130, 230) afin d'appliquer une force de freinage à une roue parmi la roue avant (2) et la roue arrière (3).
